Europäisches Patentamt

European Patent Office

Office européen des brevets

(19)

(11) Numéro de publication : **0 436 445 A1**

(12)

# DEMANDE DE BREVET EUROPEEN

(21) Numéro de dépôt : 90420513.5

(22) Date de dépôt : 28.11.90

(51) Int. Cl.$^5$ : **H04M 1/00**

(30) Priorité : 01.12.89 FR 8916150

(43) Date de publication de la demande :
**10.07.91 Bulletin 91/28**

(84) Etats contractants désignés :
**DE FR GB IT NL**

(71) Demandeur : **HORLOGERIE PHOTOGRAPHIQUE FRANCAISE (société anonyme)**
**Avenue de Savoie**
**F-74130 Bonneville (FR)**

(72) Inventeur : **Cornu, Bruno**
**61 chemin du Périmètre**
**F-74000 Annecy (FR)**
Inventeur : **Lambersend, Bruno**
**880 route de la Gerbe**
**F-74130 Bonneville (FR)**

(74) Mandataire : **de Beaumont, Michel**
**Cabinet Poncet 7, chemin de Tillier B.P. 317**
**F-74008 Annecy RP Cédex (FR)**

(54) Interface d'entrée électronique de poste télephonique.

(57)  L'interface selon l'invention comprend trois interrupteurs électroniques principaux (1, 2, 3) pour connecter aux bornes de ligne (5, 7) les circuits principaux du poste téléphonique (38-39) et un convertisseur de récupération d'énergie de signal d'appel (40). Le premier interrupteur électronique (1) est connecté en sortie d'un premier pont redresseur (30) lui-même connecté entre les bornes de ligne (5, 7), pour alimenter les circuits (38-39) pendant les phases de décroché. Durant ces mêmes phases, le second interrupteur électronique (2) est fermé. Pendant les phases d'appel, le circuit électronique (3839) est alimenté par la tension (36) fournie par le convertisseur d'énergie (40), lui-même alimenté par un second pont redresseur (31) connecté lui-même aux bornes de ligne (5, 7) par l'intermédiaire d'un condensateur (8). Dans cette phase, l'interrupteur (3) est fermé, les interrupteurs (1) et (2) sont ouverts. Le circuit permet de remplacer l'ensemble de commutation mécanique des postes téléphoniques à sonnerie intégrée.

EP 0 436 445 A1

Jouve, 18, rue Saint-Denis, 75001 PARIS

Fig.1

## INTERFACE D'ENTREE ELECTRONIQUE DE POSTE TELEPHONIQUE

La présente invention concerne les circuits de poste téléphonique, et plus particulièrement les circuits d'interface destinés à commuter les signaux électriques entre les deux fils de ligne téléphonique et le système de transmission et de gestion du poste téléphonique.

L'interface doit d'une part assurer la transmission des signaux d'appel, des signaux de données à fréquence vocale, mais également assurer la distribution d'énergie électrique captée sur la ligne téléphonique et permettant d'alimenter les organes de commande et de contrôle du poste téléphonique.

L'interface de poste téléphonique doit gérer ces transmissions de signaux et d'énergie en fonction des phases de fonctionnement du poste. Dans les postes modernes, on distingue quatre états principaux : un état de repos, un état d'écoute discrète, un état d'écoute amplifiée combiné décroché, et un état mains libres. Ces états ainsi que les transitions entre ces mêmes états sont définis dans la recommandation PAA : 1065-DE.6 de l'Administration Française des Postes et Télécommunications. En particulier, le passage de l'état de repos à l'état d'écoute discrète se fait par décroché ou raccroché du combiné, opération qui active des interrupteurs mécaniques appelés crochets de combiné ; le passage de l'état de repos à l'état mains libres s'effectue par manoeuvre d'une touche de prise de ligne sans décrocher appelée PSLD ; cette même touche permet le passage de l'état d'écoute discrète à l'état d'écoute amplifiée combiné décroché.

Dans des postes téléphoniques traditionnels, les dispositifs d'appel ou de sonnerie sont du type électromécanique et sont excités par un signal d'appel qui est généralement une tension sinusoïdale de fréquence constante et d'amplitude pouvant atteindre une centaine de Volts. Pour des postes modernes, par exemple tel que décrit dans le document EP-A-O 285 749, la sonnerie est réalisée à l'aide d'un dispositif électronique où l'énergie électrique dudit signal d'appel est convertie en une énergie acoustique à l'aide d'un amplificateur excitant un haut-parleur. Le signal d'excitation provient d'un générateur de mélodie. La version de sonnerie dite intégrée, par exemple décrite dans les documents EP-A-O 137 901 et FR-A-2 508 744, met à profit des moyens existants destinés à la fonction d'écoute amplifiée, à savoir l'amplificateur et le haut-parleur, pour générer le signal acoustique d'appel. En outre, le clavier d'un poste est programmé pour contrôler le niveau de ladite puissance acoustique et éventuellement pour modifier le ton musical de la mélodie.

Dans un poste téléphonique classique à sonnerie intégrée, l'interface d'entrée du poste comprend plusieurs commutateurs mécaniques de prise de ligne, certains étant des commutateurs à contact repos-travail, d'autres des commutateurs à contact travail, plusieurs de ces commutateurs étant de type bistable. Ces commutateurs mécaniques sont assemblés dans un ensemble mécanique de commutation muni de cames et de leviers, les leviers étant destinés à être actionnés mécaniquement d'une part par les crochets du combiné, d'autre part par une touche PLSD.

Une prise de ligne peut se faire à l'aide de cet ensemble mécanique de commutation, par un premier groupe de commutateurs, dénommé interrupteur de boucle, qui comporte deux contacts :
- un crochet commutateur, actionné par le combiné,
- un contact de prise de ligne sans décrocher ou PLSD.

A cet interrupteur de boucle vient s'adjoindre un troisième contact appelé CAT ou circuit anti-tintement, destiné à inhiber un dispositif de sonnerie parallèle.

L'actionnement des leviers de cet ensemble mécanique de commutation nécessite de disposer de manière appropriée les crochets de combiné et la touche PLSD par rapport au support de l'ensemble mécanique de commutation, généralement un circuit imprimé supportant les autres éléments de circuit électronique du poste. Il en résulte que cette technologie mécanique de l'ensemble de commutation introduit des contraintes importantes dans la conception des postes téléphoniques, et, de manière analogue, la conception de nouvelles formes de postes téléphoniques oblige à concevoir à chaque fois un nouvel ensemble mécanique de commutation.

En outre, ces ensembles mécaniques de commutation sont des organes relativement complexes et fragiles, nécessitant des réglages nombreux lors du montage des postes, des déréglages se produisant sur la chaîne de montage ou en utilisation lors des chocs et demandant le plus souvent des mises au point. Il en résulte une augmentation des coûts de production, et une baisse de fiabilité.

Dans les postes modernes, dans lesquels la gestion du poste est assurée par un microprocesseur, par exemple tels que décrits dans le document EP-A-O 285 749, il est en outre nécessaire de prévoir des contacts auxiliaires pour donner au microprocesseur les informations suffisantes sur l'état du poste. Il en résulte un coût supplémentaire, s'ajoutant au coût de l'ensemble mécanique de commutation.

La présente invention a notamment pour objet d'éviter les inconvénients des structures connues d'interfaces d'entrée de poste téléphonique à sonnerie intégrée, en proposant une nouvelle structure dans laquelle les organes de commutation sont entièrement électroniques.

La structure selon l'invention permet de remplir toutes les fonctions habituellement remplies par les interfaces d'entrée de postes téléphoniques, conformément aux règlementations de l'Administration des Télécommunications, ces fonctions étant remplies en utilisant un contact de crochet traditionnel, une touche PLSD qui est un simple contact électrique.

L'une des difficultés réside dans le fait que, pour un poste téléphonique au repos, c'est-à-dire lorsque le contact de crochet commutateur et le contact de prise de ligne sont ouverts, le poste ne doit consommer sur la ligne téléphonique aucune composante continue. Cette exigence doit être respectée quelque soit le signal présent sur la ligne téléphonique, même en présence d'un signal de grande amplitude tel que le signal d'appel.

Les circuits de commutation électroniques de la présente invention doivent donc satisfaire ces exigences dans tous les états de fonctionnement du poste, et quelle que soit la polarité relative des deux fils de ligne.

L'invention a en outre pour objet de concevoir un tel circuit d'interface à interrupteur de boucle électronique et un circuit anti-tintement pour poste téléphonique à sonnerie intégrée, qui puissent être réalisés à faible coût, et, de préférence, qui puissent être réalisés pour leur plus grande partie sous forme de circuit intégré.

Un mode de réalisation préféré de l'invention vise en outre à résoudre le problème de la durée d'actionnement de la touche PLSD. Selon les normes en vigueur, il faut qu'un actionnement de la touche d'une durée inférieure à 50 millisecondes n'entraîne pas la prise de ligne sans décrocher, et qu'un actionnement de la touche selon une durée égale ou supérieure à 200 millisecondes entraîne à coup sûr la prise de ligne sans décrocher. Le temps durant lequel doit être appuyée la touche PLSD varie considérablement en fonction des conditions de ligne. La difficulté de respecter ces normes dont le but est la sécurité et le confort d'utilisation se présente lorsque deux postes fonctionnent en parallèle sur une ligne longue, c'est-à-dire à distance importante du central téléphonique. L'invention vise à contourner une telle difficulté, en permettant d'utiliser une touche PLSD de type contact monostable, et prévoyant des moyens pour augmenter le temps d'actionnement apparent de ladite touche PLSD.

On comprendra que la solution électronique de la présente invention permet de s'affranchir des contraintes liées aux ensembles mécaniques de commutation actuellement utilisés dans les postes téléphoniques, puisque les organes de commutation électronique peuvent être disposés sur des circuits imprimés à distance des commutateurs mécaniques constituant le crochet de combiné et la touche PLSD, auxquels ils sont reliés par des connexions électriques et non par des leviers mécaniques.

Pour atteindre ces objets ainsi que d'autres, l'interface d'entrée de poste téléphonique à sonnerie intégrée selon l'invention comprend, de façon connue :

– des premiers moyens de commutation pour connecter sélectivement aux lignes, en phases de conversation et de numérotation, l'ensemble des circuits de transmission et de gestion du poste,

– des seconds moyens de commutation pour connecter sélectivement aux lignes par l'intermédiaire d'un condensateur, en phase d'appel, un convertisseur de récupération d'énergie du signal d'appel alimentant un générateur de mélodie de sonnerie,

– des moyens pour commander lesdits premiers et seconds moyens de commutation en fonction de la position du crochet de combiné et de la position de la touche de prise de ligne sans décrocher PLSD.

Selon l'invention :

– un premier interrupteur électronique est connecté entre une première borne d'alimentation de l'ensemble des circuits de transmission et de gestion du poste et une première borne de sortie d'un premier pont redresseur dont les bornes d'entrée sont connectées respectivement au premier et au second fils de ligne,

– un second interrupteur électronique est connecté entre la seconde borne d'alimentation de l'ensemble des circuits de transmission et de gestion du poste et la seconde borne de sortie dudit premier pont redresseur,

– un troisième interrupteur électronique est connecté entre une première borne d'alimentation du convertisseur de récupération d'énergie et une première borne de sortie d'un second pont redresseur dont les bornes d'entrée sont connectées respectivement au second fil de ligne par une liaison directe, et au premier fil de ligne par l'intermédiaire dudit condensateur,

– la seconde borne de sortie dudit second pont redresseur est connectée simultanément aux secondes bornes d'alimentation du convertisseur de récupération d'énergie et de l'ensemble des circuits de transmission et de gestion du poste, constituant une masse commune,

– des moyens de commande actionnent lesdits interrupteurs électroniques en fonction des positions du crochet de combiné et de la touche PLSD, de façon que :

• au repos, les trois interrupteurs électroniques sont ouverts,

• pendant une prise de ligne par décroché du combiné ou actionnement de la touche PLSD, le second interrupteur est fermé en permanence, le troisième interrupteur électronique est ouvert en permanence, la fermeture du premier interrupteur électronique étant continue pendant les phases de conversation,

• en présence d'un signal d'appel sur la ligne téléphonique, les premier et second interrupteurs électroniques sont ouverts, le troisième interrupteur électronique est fermé.

Selon un mode de réalisation avantageux, l'émission des impulsions de numérotation se fait par ouverture périodique du premier interrupteur électronique.

Selon un mode de réalisation avantageux, l'interface selon l'invention comprend en outre un quatrième interrupteur électronique connecté en série avec un dispositif limiteur de tension, l'ensemble étant connecté entre le second fil de ligne et ledit condensateur, le quatrième interrupteur électronique étant commandé par lesdits moyens de commande pour être fermé pendant les phases de conversation et de numérotation, et pour être ouvert pendant les phases d'appel.

Le premier interrupteur électronique comprend avantageusement un transistor principal bipolaire dont l'émetteur est connecté audit premier pont redresseur, dont le collecteur est connecté à la première borne d'alimentation de l'ensemble des circuits de transmission et de gestion du poste, et dont la base est connectée au collecteur d'un transistor de commande de premier interrupteur, l'émetteur du transistor de commande de premier interrupteur étant connecté à la masse commune par l'intermédiaire de deux résistances en série, la base du transistor de commande de premier interrupteur recevant les signaux produits par une porte logique OU, rendant passant ledit transistor de commande de premier interrupteur et le transistor principal dans l'un des cas :

– actionnement du crochet de combiné, indiquant que le combiné est décroché,

– actionnement de la touche de prise de ligne sans décrocher PLSD.

Selon un mode de réalisation, le second interrupteur électronique est un transistor de type MOS dont le drain est connecté à la masse commune, dont la source est connectée à la seconde borne de sortie du premier pont redresseur et dont la grille est commandée par un circuit de commutation piloté par des signaux de verrouillage de boucle reçus des circuits de gestion du poste pour commander sélectivement la fermeture du transistor pendant les phases de conversation et de numérotation, et son ouverture pendant les phases de repos et d'appel.

Le circuit réalisant la porte logique OU comprend avantageusement trois diodes principales dont les cathodes sont connectées à la base du transistor de commande de premier interrupteur par l'intermédiaire d'une même résistance, et dont les anodes sont connectées pour recevoir respectivement :

– le signal produit par le crochet de combiné en fonction de leur position, par l'intermédiaire d'une diode secondaire en série avec une résistance,

– le signal produit par la touche PLSD, par l'intermédiaire d'une diode secondaire en série avec une résistance,

– le signal de verrouillage fourni par un microsystème de gestion de poste.

Un condensateur est avantageusement connecté entre la masse commune et l'anode de la diode principale relative à la touche PLSD, prolongeant la durée d'effet d'une impulsion produite sur cette touche PLSD.

Selon un mode de réalisation :

– le troisième interrupteur électronique est un transistor bipolaire dont l'émetteur est connecté à la première borne de sortie du second pont redresseur, dont le collecteur est connecté à la première borne d'alimentation du convertisseur de récupération d'énergie, et dont la base est connectée d'une part à l'émetteur par une première résistance et d'autre part à la masse commune par l'intermédiaire d'une seconde résistance en série avec le collecteur d'un premier transistor de commande,

– la base dudit premier transistor de commande est connectée au collecteur d'un second transistor de commande dont l'émetteur est connecté à la masse commune et dont la base est connectée au point milieu du pont de résistances, de sorte que, en l'absence d'un signal de prise de ligne, le troisième interrupteur est en attente d'un signal d'appel et,

• en absence de signal d'appel, le troisième interrupteur est ouvert,

• en présence d'un signal d'appel d'amplitude suffisante, le troisième interrupteur devient passant et transmet l'énergie correspondante au convertisseur de récupération d'énergie pour production d'une mélodie de sonnerie.

D'autres objets, caractéristiques et avantages de la présente invention, ressortiront de la description suivante d'un mode de réalisation particulier, faite en relation avec les figures jointes, parmi lesquelles :

– la figure 1 illustre la structure générale du dispositif électronique de commutation selon l'invention dans un poste téléphonique ;

– la figure 2 illustre la même structure générale de commutation avec plus de détails ; et

– la figure 3 est un schéma électronique de principe pour la réalisation de l'interface d'entrée électronique selon la présente invention.

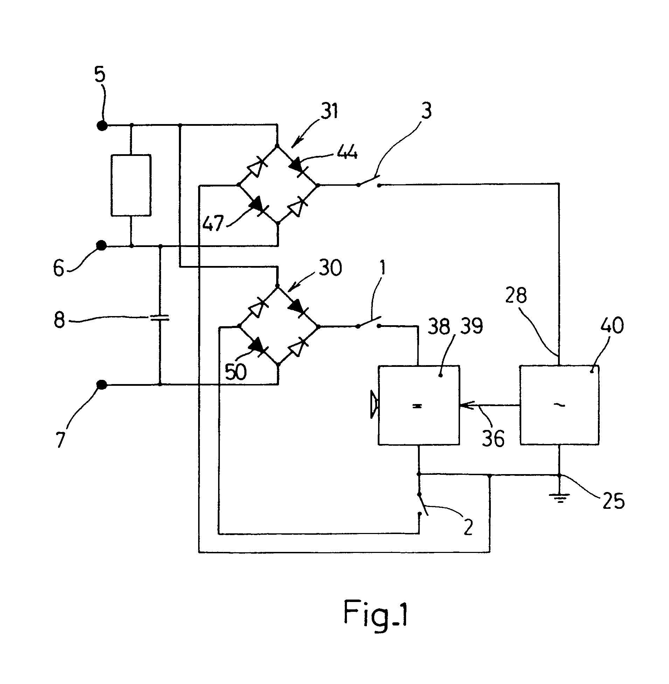

On se réfère tout d'abord à la figure 1 pour comprendre le problème que pose la solution d'une commutation électronique dans un interface de poste téléphonique à sonnerie intégrée.

Le poste est connecté entre les deux fils de ligne LI et L2, portant respectivement les références numériques 7 et 5. Un condensateur de découplage 8 est connecté entre la première borne de ligne 7 et une borne intermédiaire 6. Un circuit anti-tintement CAT est connecté entre les bornes 6 et 5. Un premier pont redresseur 30 est prévu pour s'affranchir des polarités desdits fils et fournit une tension unipolaire d'alimentation de l'ensemble des circuits électroniques comprenant les circuits de transmission 38 et les circuits de gestion 39 du poste téléphonique. L'alimentation en courant continu par le premier pont redresseur 30 se fait pendant l'état décroché, état pendant lequel la ligne téléphonique transmet les signaux de communication et fournit simultanément l'énergie nécessaire pour alimenter les circuits électroniques de transmission et de gestion 38-39. Cette alimentation doit toutefois être interrompue pendant les autres phases de fonctionnement du poste, à savoir la phase d'appel et la phase de repos. On prévoit, pour cela, un premier interrupteur électronique 1, connecté entre le premier pont redresseur 30 et les circuits 38-39.

Pendant la phase d'appel, le poste reçoit sur la ligne téléphonique le signal d'appel, dont l'énergie électrique est prélevée pour alimenter les circuits électroniques générant la mélodie d'appel. Ce prélèvement d'énergie doit se faire de manière qu'aucun courant continu, qui sert de signalisation d'un poste décroché, ne circule sur la ligne. Ce problème est résolu dans le cadre de la présente invention à l'aide d'un ensemble comprenant le condensateur 8 et les interrupteurs 1 et 2 qui restent ouverts durant ladite phase.

Le rôle de l'interrupteur 1 étant décrit plus haut, l'adjonction de l'interrupteur 2 permet de résoudre le problème ainsi posé. En effet, si l'interrupteur 2 n'est pas introduit, ce qui revient au même de dire que la masse commune 25 est reliée directement à la deuxième sortie du pont redresseur 30, et que le potentiel du fil 5 est supérieur à celui du fil 7, le courant circule du fil 5 au convertisseur 40 en passant par la diode 44 du pont redresseur 31 et par l'interrupteur 3 en position fermée. A la masse commune 25, ce courant emprunte deux voies possibles pour revenir au fil 7, une des voies étant la diode 50 du pont redresseur 30 et l'autre étant la diode 47 du pont redresseur 31 en série avec le condensateur 8. Or, la mise en série de ladite diode 47 et du condensateur 8 présente une impédance plus élevée que celle de ladite diode 50. Il en résulte que la quasi totalité dudit courant revient au fil 5 en passant par la diode 50. Dans ce cas, le condensateur 8 destiné à découpler la composante continue dudit courant ne joue plus pleinement son rôle.

Le convertisseur de récupération d'énergie du signal d'appel 40 assure la récupération d'énergie du signal d'appel pour alimenter le générateur de mélodie de sonnerie, représenté schématiquement sur la figure comme faisant partie de l'ensemble de circuit 38-39. Ainsi, en phase d'appel, le générateur de mélodie et l'ensemble des circuits électroniques nécessaires sont alimentés par le convertisseur 40, alors que en phase d'écoute décrochée, les circuits électroniques 38-39 sont alimentés directement par l'énergie continue de la ligne téléphonique.

Les interrupteurs électroniques 1, 2 et 3 sont commandés de façon que :
- lorsque le poste est au repos, les trois interrupteurs sont ouverts,
- lorsque le poste est appelé, le premier interrupteur 1 et le second interrupteur 2 sont ouverts, tandis que le troisième interrupteur 3 est fermé ;
- pour une prise de ligne, par crochet du combiné ou par actionnement de la touche PLSD, les interrupteurs 1 et 2 sont fermés, tandis que le troisième interrupteur 3 est ouvert ;
- durant la phase de numérotation par impulsions, l'interrupteur 2 reste fermé et l'interrupteur 3 reste ouvert, et l'émission des impulsions se fait par l'ouverture périodique de l'interrupteur 1.

Cette structure de circuit permet d'admettre un dispositif anti-tintement CAT, connecté de manière usuelle entre les bornes 5 et 6, sans perturber les impulsions de courant de ligne, notamment en valeur résiduelle.

Des moyens de commande, non représentés sur la figure 1, actionnent les interrupteurs 1, 2 et 3 électroniques en fonction des états du poste, c'est-à-dire en fonction de l'état du crochet de combiné et de la touche PLSD.

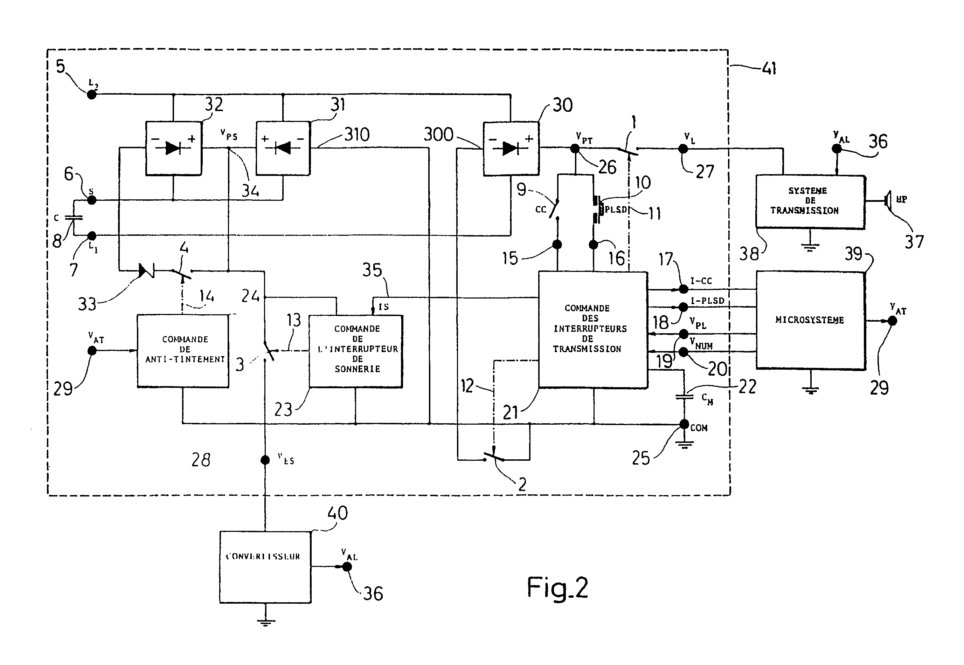

Le schéma synoptique de cette solution est représenté plus en détail sur la figure 2. Pour la clarté de l'exposé, ce schéma est associé aux sous-ensembles faisant partie d'un poste téléphonique traditionnel, à savoir :
- le système de transmission 38 comprenant les fonctions de transmission proprement dites et les fonctions d'écoute amplifiée,
- le système de gestion 39, par exemple un microsystème, jouant le rôle de superviseur et de gestionnaire des informations entrant en jeu dans un poste,
- le convertisseur de récupération d'énergie du signal d'appel 40, transformant le signal d'appel redressé en une tension continue destinée à alimenter le microsystème 39 et l'amplificateur de l'écoute amplifiée pour générer l'énergie acoustique par le haut-parleur 37 dans le cadre d'une sonnerie dite intégrée.

Le schéma de la figure 2 reprend les trois interrupteurs principaux 1, 2 et 3, à savoir les interrupteurs 1 et 2 pour les fonctions de transmission et l'interrupteur 3 pour la fonction d'appel.

A ces interrupteurs vient s'ajouter l'interrupteur 4 destiné à inhiber la sonnerie parallèle, et à assurer la fonction anti-tintement.

Le premier interrupteur électronique 1 est connecté entre une première borne d'alimentation 27 de l'ensemble des circuits de transmission 38 du poste téléphonique et une première borne de sortie 26 du premier pont redresseur 30 dont les bornes d'entrée sont connectées respectivement au premier fil de ligne 7 et au second fil de ligne 5.

Le second interrupteur électronique 2 est connecté entre la seconde borne d'alimentation 25 de l'ensemble des circuits de transmission 38 du poste et la seconde borne de sortie 300 du premier pont redresseur 30.

Le troisième interrupteur électronique 3 est connecté entre une première borne d'alimentation 28 du convertisseur de récupération d'énergie 40 et une première borne de sortie 34 du second pont redresseur 31 dont les bornes d'entrée sont connectées respectivement au second fil de ligne 5 par une liaison directe et au premier fil de ligne 7 par l'intermédiaire du condensateur 8.

La seconde borne de sortie 310 du second pont redresseur 31 est connectée simultanément aux secondes bornes d'alimentation du convertisseur de récupération d'énergie 40 et de l'ensemble des circuits de transmission 38 du poste, constituant une masse commune 25.

Les moyens de commande 21 des interrupteurs de transmission 1, 2 et 3 commandent lesdits interrupteurs en fonction des positions du crochet de combiné 9 et de la touche PLSD 10.

La commande d'interrupteur de sonnerie 23 commande le troisième interrupteur électronique 3, pour fournir un signal au convertisseur d'énergie 40, en fonction d'une part des informations données par le circuit de commande 21 des interrupteurs de transmission, et d'autre part du signal d'appel reçu sur la ligne téléphonique et transitant par le deuxième pont redresseur 31 et le condensateur 8.

Le circuit de commande anti-tintement 24, actionnant le quatrième interrupteur électronique 4, est commandé par le microsystème 39 ou par le circuit de commande des interrupteurs de transmission 21.

Pour établir une communication, en demandeur ou en demandé, une ligne peut être prise soit par le crochet commutateur 9, soit par la touche PLSD 10. Par cette action, le circuit de commande 21 est mis sous tension et fournit des signaux sur les lignes 11 et 12 permettant de fermer les interrupteurs électroniques 1 et 2. Il fournit également au microsystème 39 des informations par la ligne 17 sur l'état du crochet de combiné et des informations par la ligne 18 sur l'état de la touche PLSD, pour signaler les activités des interrupteurs de crochet 9 et de la touche PLSD 10. En outre, il inhibe le dispositif d'appel par un signal présent sur la ligne 35. Il importe de noter que, si l'interrupteur de crochet 9 est à action bistable, la touche PLSD 10 est impulsive ou à action monostable, c'est-à-dire que sa fermeture ne dure que pendant un laps de temps pendant lequel cette touche est actionnée. La capacité de maintien 22 est destinée à prolonger une telle durée pour assurer qu'une prise de ligne soit effective.

En actionnant les premier et second interrupteurs électroniques 1 et 2, on dispose d'une tension continue, fournie par le central en régime téléalimenté via la ligne d'abonné connectée aux bornes 5 et 7, pour alimenter l'ensemble des circuits électroniques du poste, notamment le microsystème 39. Dès qu'il est opérationnel, ce dernier détecte la position de l'interrupteur de crochet 9 et de la touche PLSD 10 en lisant l'information sur les lignes 17 et 18, et valide une prise de ligne en verrouillant les interrupteurs 1 et 2 par le signal présent sur la sortie 19 qui se convertit en signaux de commande sur les lignes 11 et 12.

Pour une numérotation par impulsions, le microsystème 39 commande une ouverture périodique de l'interrupteur 1 par le signal fourni à sa sortie 20. Il fournit également un signal sur la ligne 29 au dispositif de commande 24 qui fournit à son tour une commande 14 pour fermer l'interrupteur 4 afin d'inhiber un dispositif de sonnerie parallèle branché aux bornes 5 et 6, représenté sur la figure 1. Un troisième pont redresseur 32 est prévu pour fournir un signal unidirectionnel sur la borne 34. Malgré la fermeture du quatrième interrupteur 4, le circuit d'anti-tintement reste ouvert pour des faibles signaux grâce à la diode Zener 33. De ce fait, les signaux de conversation ne seront pas perturbés par la fonction d'anti-tintement.

Au repos, les interrupteurs 1 et 2 sont ouverts et le circuit de commande 23 n'est plus inhibé en absence du signal d'inhibition sur la ligne 35. L'appel se caractérise par la présence, aux bornes 5 et 7, d'une tension sinusoïdale de grande amplitude, superposée à une tension continue qui est découplée par le condensateur 8. La composante sinusoïdale est redressée par le deuxième pont 31 pour produire sur la borne de sortie 34 un signal qui alimente le circuit de commande 23 pour fermer l'interrupteur 3 par le signal 13. La tension de la borne d'entrée 28 du convertisseur 40 présente une amplitude approximativement égale à celle de la borne 34, et alimente le convertisseur 40 qui fournit une tension continue sur la ligne 36 pour alimenter les circuits électroniques 38 afin de produire l'énergie acoustique d'appel par le haut-parleur 37.

Grâce au condensateur 8, la composante continue du courant de ligne est nulle en phase d'appel, lorsque les interrupteurs 1 et 2 sont ouverts. L'absence de cette composante est la condition imposée à un poste raccroché, en appel ou non.

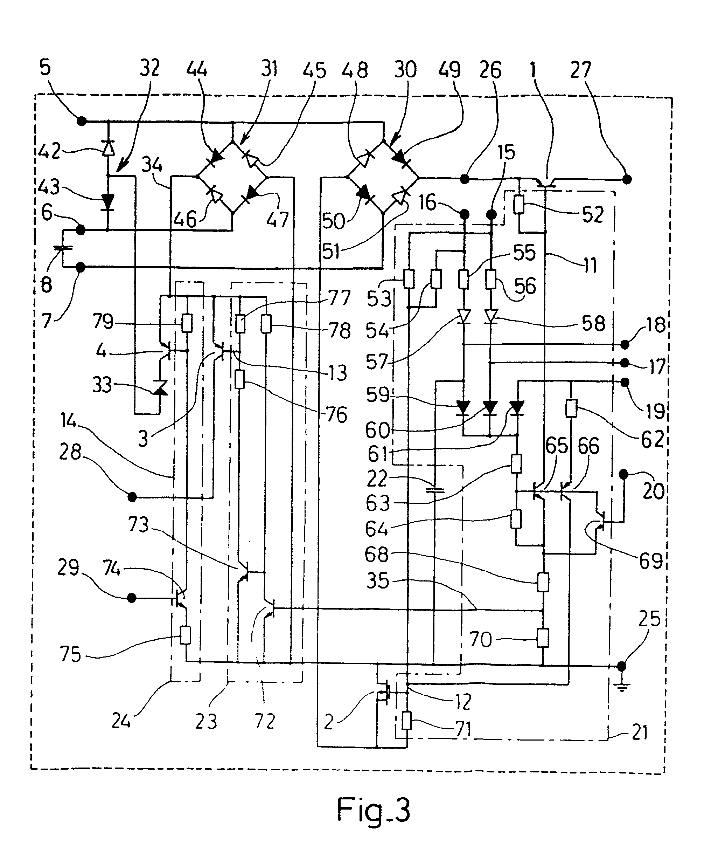

La figure 3 représente plus en détail le circuit de la figure 2. Les sous-ensembles 21, 23 et 24 de commande ont été représentés entre des contours en traits mixtes.

Le premier interrupteur électronique 1 comprend un transistor principal bipolaire, de type PNP, dont l'émetteur est connecté à la première borne de sortie 26 du premier pont redresseur 30, dont le collecteur est connecté à la première borne d'alimentation 27 des circuits de transmission et de gestion 38-39 du poste, et dont la base est connectée au collecteur d'un transistor de commande de premier interrupteur 65. L'émetteur du transistor de commande de premier interrupteur 65 est connecté à la masse commune 25 par l'intermédiaire de deux résistances en série 68 et 70. La base du transistor de commande de premier interrupteur 65 est connectée à la sortie d'une porte logique OU par l'intermédiaire d'une résistance 63 : une résistance 64 relie l'émetteur et la base du transistor 65, une seconde résistance 63 relie la base du transistor 65 aux cathodes de trois diodes 59, 60 et 61. L'anode de la diode 59 est connectée à la cathode d'une diode 57 dont l'anode est elle-même connectée par l'intermédiaire d'une résistance 55 à une borne 16. La borne 16 est connectée à la borne 26 de sortie du premier pont redresseur 30 par l'intermédiaire du contact de prise de ligne sans décrocher 10 représenté sur la figure 2. L'anode de la diode 60 est connectée à la cathode d'une diode 58 dont l'anode est elle-même connectée par l'intermédiaire d'une résistance 56 à une borne 15. La borne 15 est connectée à la borne 26 de sortie du premier pont redresseur 30 par l'intermédiaire du crochet de combiné 9 représenté sur la figure 2. L'anode de la diode 61 est connectée à la sortie 19 du microsystème 39. La borne 19 reçoit les signaux de verrouillage du microsystème 39 de gestion du poste, pour verrouiller le premier interrupteur électronique 1 à l'état passant pendant la phase de conversation.

Un condensateur 22 est connecté entre la masse commune 25 et l'anode de la diode principale 59 relative à la touche PLSD. L'effet du condensateur 22 est de prolonger le signal électrique résultant d'une impulsion produite sur la touche PLSD 10.

Un transistor de numérotation 69 reçoit sur sa base les signaux présents sur la borne de sortie 20 du microsystème 39 ou signaux de numérotation. L'émetteur du transistor de numérotation 69 est connecté à l'émetteur du transistor de commande de premier interrupteur 65, et son collecteur est connecté à la base dudit transistor de commande de premier interrupteur 65.

Le dispositif de commande 21 comprend en outre les moyens pour commander le second interrupteur 2 électronique. Le second interrupteur 2, dans le mode de réalisation représenté, est un transistor du type N-MOS à canal enrichi. Sa source est connectée à la seconde borne de sortie du premier pont redresseur 30, son drain est connecté à la masse commune 25. Sa grille est connectée d'une part à la source par une résistance 71, de seconde part aux bornes 15 et 16 par des résistances 53 et 54, et de troisième part au collecteur d'un transistor de commande de second interrupteur 66. L'émetteur du transistor 66 est connecté à la borne 19 par l'intermédiaire de la résistance 62, et sa base est connectée à la base du transistor de commande de premier interrupteur 65.

Le troisième interrupteur électronique 3 est un transistor bipolaire de type PNP dont l'émetteur est connecté à la première borne de sortie 34 du second pont redresseur 31 et dont le collecteur est connecté à la borne d'alimentation 28 du convertisseur de récupération 40. La base du transistor 3 est connectée d'une part à son émetteur par une résistance 77 et d'autre part au collecteur d'un premier transistor de commande 73 par l'intermédiaire d'une résistance 76. Son émetteur est connecté à la masse commune 25. La base du premier transistor de commande 73 est connectée au collecteur d'un second transistor de commande 72, et est connectée à l'émetteur du transistor 3 par une résistance 78. L'émetteur du second transistor de commande 72 est connecté à la masse commune 25, et sa base est connectée au point milieu du pont de résistance 68-70 par la ligne 35.

Le quatrième interrupteur électronique 4 est un transistor bipolaire de type PNP dont l'émetteur est connecté à la première borne de sortie 34 du deuxième pont redresseur 31, et dont la base est connectée à la borne de sortie d'un circuit de commande anti-tintement pour saturer ledit transistor 4 pendant les phases d'appel et de numérotation. Le circuit de commande anti-tintement comprend un transistor de commande 74 de type NPN dont la base reçoit le signal de commande anti-tintement. L'émetteur du transistor 74 est connecté à la masse commune 25 par l'intermédiaire d'une résistance 75, et son collecteur est connecté à la base du transistor 4, une résistance 79 étant connectée entre ladite base du transistor 4 et la borne 34 du deuxième pont redresseur 31. Une diode Zener est connectée par sa cathode au collecteur du transistor 4, tandis que son anode est connectée aux deux anodes de deux diodes 42 et 43 dont les cathodes sont connectées respectivement à la seconde borne de ligne 5 et à la borne 6. Les diodes 42 et 43 forment, avec les diodes 44 et 46, un troisième pont redresseur pour le circuit anti-tintement.

Le fonctionnement des circuits de commande va être décrit ci-après en relation avec les différentes phases opérationnelles.

Lors d'un court-circuit entre les bornes 15 et 26 résultant d'une prise de ligne par le crochet commutateur 9, le transistor 2 est mis en conduction par une commande sur la ligne 12 qui s'obtient par le diviseur de tension formé par les résistances 53 et 71. En outre, le circuit composé des éléments 56, 58, 60, 63, 64, 68 et 70 est aussi mis sous tension, rendant ainsi conducteur le transistor 65 dont le courant collecteur sur la ligne 11 est principalement destiné à mettre en conduction le transistor 1. Quant à la résistance 52, elle est introduite pour assurer un bon blocage de ce transistor. Il en résulte également que l'information de décroché présente sur la ligne 17 devient active, à l'état logique 1, pour signaler l'activité du crochet de combiné 9.

Un fonctionnement similaire intervient lors d'une prise de ligne par la touche PLSD 10, qui a pour effet de court-circuiter les bornes 16 et 26. Il convient toutefois de noter une différence, car une mise sous tension du circuit composé d'éléments 55, 57, 59, 63, 64, 68 et 70 ne fait pas conduire les transistors 65 et 1 de manière instantanée, à cause de la présence d'une constante de temps due au condensateur de maintien 22 dont le but est de maintenir l'information de prise de ligne sans décrocher sur la ligne 18 à l'état haut et les transistors 65 et 1 en conduction, même lorsque la touche de prise de ligne sans décrocher 10 n'est plus actionnée.

Pour verrouiller une prise de ligne par la touche PLSD 10, on applique une tension sur la ligne 19 destinée, d'une part, à maintenir les transistors 65 et 1 en conduction par le circuit composé de 61, 63, 64, 68 et 70 et, d'autre part, à maintenir le transistor 2 en conduction par le circuit composé de 62 et 66.

L'émission des impulsions de numérotation consiste à appliquer une tension périodique sur la borne de sortie 20 pour saturer le transistor 69 et bloquer périodiquement les transistors 65 et 1. Pour inhiber le dispositif de sonnerie branché aux bornes 5 et 6, une tension sur la borne 29 est appliquée à la base du transistor de commande 74 et convertie en un courant, via la résistance 75, pour saturer le transistor 4. On a ainsi limité la tension aux bornes 5 et 6 via le pont redresseur 32 réalisé à l'aide des diodes 42, 43, 44 et 46 et la diode Zener 33.

Les diodes 59, 60 et 61 constituent une porte logique OU dont les entrées sont constituées par les lignes 17, 18 et 19 et la sortie est destinée à commander les transistors 65 et 1 par le circuit composé d'éléments 63, 64, 68 et 70. Les diodes 57 et 58 servent d'interrupteurs pour isoler le circuit composé de 53, 54, 55, 56, 71, 2 des lignes 17 et 18, empêchant éventuellement une conduction intempestive du transistor 2. Le pont redresseur 30 est réalisé, dans l'exemple préféré, à l'aide des diodes 48, 49, 50 et 51.

Durant une prise de ligne, le signal présent sur la ligne 35 est une tension positive, même durant la phase de numérotation par impulsions. De ce fait, le transistor 72 est toujours saturé, bloquant ainsi les transistors 73 et 3 pour éviter un auto-tintement dû au transitoire de la tension de ligne et un courant résiduel empruntant le chemin fil 5, diode 44, transistor 3, convertisseur 40, transistor 2, diode 50, fil 7, lorsque le potentiel du fil 5 est supérieur à celui du fil 7 en numérotation par impulsions.

Au repos, le signal présent sur la ligne 35 est nul et le transistor 72 est bloqué. En présence d'un signal d'appel sur les bornes 5 et 7, au préalable découplé par le condensateur 8 et redressé par le pont 31 réalisé à l'aide des diodes 44, 45, 46 et 47, on obtient une tension alternative redressée sur la borne de sortie 34 qui sature le transistor 3 via le circuit de commande formé par les éléments 73, 76, 77 et 78. Cette tension.

est ainsi transmise à la borne 28 pour alimenter le convertisseur de récupération d'énergie 40.

Le transistor de commande 74 peut être commandé par une tension présente sur la borne 29 produite par le microsystème 39. Une autre alternative pour commander le transistor de commande 74 consiste à connecter sa base directement à l'émetteur du transistor de commande de premier interrupteur 65. Dans ce cas, l'interrupteur 4 est automatiquement actionné dès qu'une prise de ligne s'est opérée.

La présente invention n'est pas limitée aux modes de réalisation qui ont été explicitement décrits, mais elle en inclut les diverses variantes et généralisations contenues dans le domaine des revendications ci-après.

**Revendications**

1. Interface d'entrée de poste téléphonique à sonnerie intégrée, comprenant :
   – des premiers moyens de commutation pour connecter sélectivement aux lignes (5, 7) en phases de conversation et de numérotation, l'ensemble des circuits de transmission et de gestion (38-39) du poste,
   – des seconds moyens de commutation pour connecter sélectivement aux lignes (5, 7) par l'intermédiaire d'un condensateur (8), en phase d'appel, un convertisseur de récupération d'énergie du signal d'appel (40) alimentant un générateur de mélodie de sonnerie,
   – des moyens pour commander lesdits premiers et seconds moyens de commutation en fonction de la position des crochets de combiné (9) et de la position d'une touche de prise de ligne sans décrocher PLSD (10), caractérisé en ce que :
   – un premier interrupteur électronique (1) est connecté entre une première borne d'alimentation (27) de l'ensemble des circuits de transmission et de gestion (38-39) du poste et une première borne de sortie (26) d'un premier pont redresseur (30) dont les bornes d'entrée sont connectées respectivement au premier (7) et au second (5) fils de ligne,
   – un second interrupteur électronique (2) est connecté entre la seconde borne d'alimentation (25) de l'ensemble des circuits de transmission et gestion (38-39) du poste et la seconde borne de sortie (300) dudit premier pont redresseur (30),
   – un troisième interrupteur électronique (3) est connecté entre une première borne d'alimentation (28) du convertisseur de récupération d'énergie (40) et une première borne de sortie (34) d'un second pont redresseur (31)

dont les bornes d'entrée sont connectées respectivement au second fil de ligne (5) par une liaison directe, et au premier fil de ligne (7) par l'intermédiaire dudit condensateur (8),

– la seconde borne de sortie (310) dudit second pont redresseur (31) est connectée simultanément aux secondes bornes d'alimentation du convertisseur de récupération d'énergie (40) et de l'ensemble des circuits de transmission et de gestion (38-39) du poste, constituant une masse commune (25),

– des moyens de commande (21) actionnent lesdits interrupteurs électroniques (1, 2, 3) en fonction des positions du crochet commutateur (9) et de la touche PLSD (10), de façon que

• au repos, les trois interrupteurs électroniques (1, 2, 3) sont ouverts,

• pendant une prise de ligne par décroché du combiné ou actionnement de la touche PLSD, le second interrupteur (2) est fermé en permanence, le troisième interrupteur électronique (3) est ouvert en permanence, la fermeture du premier interrupteur électronique (1) étant continue pendant les phases de conversation,

• en présence d'un signal d'appel sur la ligne téléphonique, les premier et second interrupteurs électroniques (1, 2) sont ouverts, le troisième interrupteur électronique (3) est fermé.

2. Interface selon la revendication 1, caractérisé en ce que, durant la phase de numérotation par impulsions, l'émission des impulsions se fait par ouvertures périodiques du premier interrupteur électronique (1).

3. interface selon l'une des revendications 1 ou 2, caractérisé en ce qu'il comprend en outre un quatrième interrupteur électronique (4) du type unidirectionnel connecté en série avec un dispositif limiteur de tension (33), l'ensemble étant connecté entre le second fil de ligne (5) et ledit condensateur (8) via le pont redresseur (32), le quatrième interrupteur électronique (4) étant commandé par lesdits moyens de commande pour être fermé pendant les phases de conversation et de numérotation, et pour être ouvert pendant les phases d'appel.

4. interface selon la revendication 3, caractérisé en ce que :

– ledit dispositif limiteur de tension est une diode Zener (33),

– ledit pont redresseur (32) a ses bornes d'entrée connectées respectivement au second fil de ligne (5) par liaison directe et au premier fil de ligne (7) par l'intermédiaire dudit condensateur (8), et ses bornes de sortie sont connectées à l'interrupteur (4) et au dispositif limiteur de tension (33).

5. interface selon l'une quelconque des revendications 1 à 4, caractérisé en ce que le premier interrupteur électronique comprend un transistor principal bipolaire (1) dont l'émetteur est connecté audit premier pont redresseur (30), dont le collecteur est connecté à la première borne d'alimentation (27) de l'ensemble des circuits de transmission et de gestion (38-39) du poste, et dont la base est connectée au collecteur d'un transistor de commande de premier interrupteur (65), l'émetteur du transistor de commande de premier interrupteur (65) étant connecté à la masse commune (25) par l'intermédiaire des résistances (68, 70) en série, la base du transistor de commande de premier interrupteur (65) étant connectée via une résistance (63) à la sortie d'une porte logique OU formée des diodes (59) et (60), rendant passant ledit transistor de commande de premier interrupteur (65) et le transistor principal (1) dans l'un des cas :

– actionnement du crochet de combiné (9), indiquant que le combiné est décroché,

– actionnement de la touche de prise de ligne sans décrocher PLSD (10).

6. Interface selon la revendication 5, caractérisé en ce que le second interrupteur électronique (2) est un transistor de type MOS dont le drain est connecté à la masse commune (25), dont la source est connectée à la seconde borne de sortie du premier pont redresseur (30) et dont la grille est commandée par un signal de commande (12) provenant d'une part d'un ensemble de résistances (53, 54, 71) pour former un diviseur de tension et d'autre part du collecteur du transistor (66) transmettant le signal de verrouillage de la boucle reçu d'un microsystème (39) pour commander sélectivement la fermeture du transistor (2) pendant les phases de conversation et de numérotation par impulsions, et son ouverture pendant les phases de repos et d'appel.

7. Interface selon l'une des revendications 5 ou 6, caractérisé en ce que ladite porte logique OU se compose des diodes (59, 60, 61) et dont les entrées (17, 18) représentent les informations indiquant les états des interrupteurs de combiné et de PLSD (9, 10) et dont l'entrée (19) est destinée à recevoir l'ordre du microsystème (39) pour commander ledit verrouillage.

8. Interface selon la revendication 6, caractérisé en ce qu'un transistor de commande de second interrupteur (66) a sa base connectée à la base du transistor de commande de premier interrupteur (65), son émetteur connecté à la borne de commande de verrouillage des circuits de gestion (39) par l'intermédiaire de la résistance (62), et son collecteur connecté à la grille du second transistor (2).

9. Interface selon l'une quelconque des revendications 5 à 8, caractérisé en ce qu'il comprend en outre un transistor de numérotation (69), dont la base reçoit les signaux de numérotation produits par les circuits de gestion (39), dont l'émetteur est connecté à l'émetteur du transistor de commande de premier interrupteur (65), et dont le collecteur est connecté à la base dudit transistor de commande de premier interrupteur (65).

10. Interface selon l'une quelconque des revendications 5 à 9, caractérisé en ce que ladite porte logique OU comprend trois diodes principales (59, 60, 61) dont les cathodes sont connectées à la base du transistor de commande de premier interrupteur (65) par l'intermédiaire d'une même résistance (63), et dont les anodes sont connectées pour recevoir respectivement :
   – le signal produit par le crochet de combiné (9) en fonction de sa position, par l'intermédiaire d'une diode secondaire (58) en série avec une résistance (56),
   – le signal produit par la touche PLSD (10), par l'intermédiaire d'une diode secondaire (57) en série avec une résistance (55),
   – les signaux de verrouillage du microsystème de gestion de poste (39).

11. Interface selon la revendication 10, caractérisé en ce qu'un condensateur (22) est connecté entre la masse commune (25) et l'anode de la diode principale (59) relative à la touche PLSD (10), prolongeant la durée d'effet d'une impulsion produite sur la touche PLSD (10).

12. Interface selon l'une quelconque des revendications 5 à 11, caractérisé en ce que :
   – un pont de résistances en série (68, 70) est connecté entre l'émetteur du transistor de commande de premier interrupteur (65) et la masse commune (25),
   – le point milieu entre lesdites résistances en série (68, 70) est connecté à l'entrée d'un dispositif de commande de sonnerie (23) pour forcer la fermeture du troisième interrupteur électronique (3) en présence d'une tension sur ledit point milieu, c'est-à-dire durant les phases de conversation et de numérotation.

13. Interface selon la revendication 12, caractérisé en ce que :
   – le troisième interrupteur électronique (3) est un transistor bipolaire dont l'émetteur est connecté à la première borne (34) de sortie du second pont redresseur (31), dont le collecteur est connecté à la première borne (28) d'alimentation du convertisseur de récupération d'énergie (40), et dont la base est connectée d'une part à l'émetteur par une première résistance (77) et d'autre part à la masse commune (25) par l'intermédiaire d'une seconde résistance (76) en série avec le collecteur d'un premier transistor de commande (73),
   – la base dudit premier transistor de commande (73) est connectée au collecteur d'un second transistor de commande (72) dont l'émetteur est connecté à la masse commune (25) et dont la base est connectée au point milieu du pont de résistances (68, 70), de sorte que, en l'absence d'un signal de décroché, le troisième interrupteur (3) est en attente d'un signal d'appel et,
      • en absence de signal d'appel, le troisième interrupteur est bloqué,
      • en présence d'un signal d'appel d'amplitude suffisante, le troisième interrupteur devient passant et transmet l'énergie correspondante au convertisseur de récupération d'énergie pour production d'une mélodie de sonnerie.

14. Interface selon l'une des revendications 3 ou 4, caractérisé en ce que le quatrième interrupteur électronique (4) est un transistor bipolaire dont l'émetteur est connecté à la première borne de sortie (34) du second pont redresseur (31) et dont la base est connectée à la borne de sortie d'un circuit de commande anti-tintement (24) pour saturer le transistor (4) pendant les phases de conversation et de numérotation.

15. Interface selon la revendication 14, caractérisé en ce que le circuit de commande anti-tintement (24) comprend un transistor de commande (74) dont la base reçoit le signal de commande anti-tintement au moins pendant la phase de numérotation, son émetteur étant connecté à la masse commune (25) par l'intermédiaire d'une résistance (75), son collecteur étant connecté à la base du transistor bipolaire (4), une résistance (79) étant connectée entre la base et la borne de sortie (34) du second pont redresseur (31).

Fig.1

Fig.2

EP 0 436 445 A1

Fig.3

Office européen
des brevets

**RAPPORT DE RECHERCHE EUROPEENNE**

Numero de la demande

EP 90 42 0513

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (Int. Cl.5) |
| D,A | FR-A-2 508 744 (THOMSON CSF TELEPHONE) * Page 2, ligne 30 - page 11, ligne 23; figures 1-3 * --- | 1,2,5,9 | H 04 M 1/00 |
| D,A | EP-A-0 137 901 (SIEMENS-ALBIS AG) * Page 2, ligne 11 - page 6, ligne 23; figure * --- | 1,2,5,9 | |
| D,A | EP-A-0 285 749 (TELENORMA TELEFONBAU UND NORMALZEIT) * Colonne 2, ligne 39 - colonne 8, ligne 3; figures 1,2 * --- | 1,2,5,7 | |
| A | WO-A-8 700 717 (INTERNATIONAL STANDARD ELECTRIC CORP.) * Page 2, ligne 23 - page 6, ligne 24; figures 1-3 * --- | 1,2,5,9 | |
| A | TN-NACHRICHTEN, vol. 91, mars 1987, pages 3-14, Telenorma, Frankfurt, DE; D. KRÄMER et al.: "TN-Terminals im neuen Design" * Pages 8-11; figures 6,9-13 * ----- | 1,2,5 | **DOMAINES TECHNIQUES RECHERCHES (Int. Cl.5)** H 04 M |

Le présent rapport a été établi pour toutes les revendications

| Lieu de la recherche | Date d'achèvement de la recherche | Examinateur |
|---|---|---|
| LA HAYE | 11-03-1991 | DELANGUE P.C.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)